# EUROPEAN PATENT APPLICATION

(11) **EP 4 418 396 A1**
(43) Date of publication of application: **21.08.2024**
(21) Application number: 23824169.9
(22) Date of filing: 12.06.2023
(51) Int. Cl.: H01M 10/058, H01M 10/0585, H01M 4/13, H01M 50/46, H01M 50/414, H01M 50/403, H01M 4/139, H01M 10/42, H01M 10/052, H01M 50/446

(54) **ELECTRODE ASSEMBLY FOR LITHIUM SECONDARY BATTERY, METHOD FOR PRODUCING SAME, AND LITHIUM SECONDARY BATTERY COMPRISING SAME**

(30) Priority: 14.06.2022 KR 20220072307; 09.06.2023 KR 20230074427
(71) Applicant: LG Energy Solution, Ltd., Seoul 07335 (KR)
(72) Inventor: JUN, Youngjin, Daejeon 34122 (KR); KIM, Minkyung, Daejeon 34122 (KR); KIM, Hyosik, Daejeon 34122 (KR); JUNG, Hyeri, Daejeon 34122 (KR); YOON, Jong Keon, Daejeon 34122 (KR); SOON, Jiyong, Daejeon 34122 (KR); KANG, Sungjoong, Daejeon 34122 (KR); KIM, Dong Kyu, Daejeon 34122 (KR)
(74) Representative: Goddar, Heinz J.
(86) International application number: PCT/KR2023/007994
(87) International publication number: WO 2023/243952

(57) **Abstract**

The present invention relates to an electrode assembly for lithium secondary battery that can further improve insulating properties between electrodes and safety of the lithium secondary battery, and a manufacturing method thereof. The electrode assembly includes: a cathode-insulating layer composite including a first insulating layer arranged on thecathode, and an anode-insulating layer composite including a second insulating layer arranged on theanode, wherein the first or second insulating layer is a porous insulating layer including polymer particles or ceramic particles having an absolute value of zeta potential of 25 mV or more, and wherein a ratio of the total thickness of the first and second insulating layers to the total thickness of the cathode-insulating layer composite and the anode-insulating layer composite may satisfy a certain range.

## Description

### [TECHNICAL FIELD]

### Cross Citation with Related Application(s)

This application claims the benefits of Korean Patent Application No. 10-2022-0072037 filed on June 14, 2022 and Korean Patent Application No. 10-2023-0074427filed on June 9, 2023 in the Korean Intellectual Property Office, the disclosures of which are incorporated herein by reference in their entirety.

The present invention relates to an electrode assembly for a lithium secondary battery that can further improve insulating properties between electrodes and safety of the lithium secondary battery, a manufacturing method thereof, and a lithium secondary battery including the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

Generally, a lithium secondary battery includes a cathode, an anode, a separator interposed between the cathode and the anode, an electrolyte, an organic solvent, and the like. Since the cathode can generate oxygen due to its unstable structure in a charged state, and there is a high danger of ignition when oxygen is generated, attempts has been made to research and develop a method capable of enhancing the safety of lithium secondary batteries.

A separator is used to ensure electrical insulation between a cathode and an anode, and a thin porous film made of polyolefin is generally used. However, a polyolefin-based separator can easily shrink in high temperature environments and thus fail to insulate between a cathode and an anode. When electrical insulation between the cathode and the anode becomes impossible, a short circuit may occur, which may interact with oxygen generated by the unstable cathode to cause ignition. In other words, when a short circuit occurs in a charged lithium secondary battery in a high-temperature environment, there is a problem that the lithium secondary battery ignites.

In order to reduce the danger of ignition and improve the safety, attempts have been made to form a porous coating layer or the like that replaces the above polyolefin-based porous separator. However, when such a porous coating layer is formed, there is a problem that electrical insulating properties between the cathode and the anode are insufficient, or capacity characteristic or life characteristic of the lithium secondary battery deteriorate due to the formation of the porous coating layer.

### [DETAILED DESCRIPTION OF THE INVENTION]

### [Technical Problem]

It is an object of the present invention to provide an electrode assembly for a lithium secondary battery that can further improve insulating properties between electrodes and safety of the lithium secondary battery while maintaining excellent electrochemical characteristics of the lithium secondary battery, and a manufacturing method thereof.

It is another object of the present invention to provide a lithium secondary battery including the above-mentioned electrode assembly and thus exhibiting excellent insulating properties between electrodes, safety and life characteristics.

### [Technical Solution]

According to one embodiment of the present invention, there is provided an electrode assembly for a lithium secondary battery comprising:
a cathode-insulating layer composite including a first insulating layer arranged on the cathode, and an anode-insulating layer composite including a second insulating layer arranged on the anode,
wherein the first or second insulating layer is a porous insulating layer including polymer particles or ceramic particles having an absolute value of zeta potential of 25 mV or more, and
wherein a ratio of a sum of thicknesses of the first and second insulating layers to a total sum of thicknesses of the cathode-insulating layer composite and the anode-insulating layer composite is 19% to 30%.

According to another embodiment of the present invention, there is provided a method of manufacturing the electrode assembly for a lithium secondary battery, the method comprising the steps of: (S1) forming a first insulating layer on a cathode to form a cathode-insulating layer composite; (S2) forming a second insulating layer on an anode to form an anode-insulating layer composite; and (S3) laminating the cathode-insulating layer composite and the anode-insulating layer composite, wherein the first or second insulating layer includes polymer particles or ceramic particles having an absolute value of zeta potential of 25 mV or more.

According to yet another embodiment of the present invention, there is provided a lithium secondary battery comprising: a battery case, an electrolyte, and the above-mentioned electrode assembly.

### [Advantageous Effects]

The electrode assembly according to one embodiment of the present invention includes a cathode-insulating layer composite and an anode-insulating layer composite in which porous insulating layers having a predetermined thickness ratio are respectively formed on a cathode and an anode. Such an electrode assembly showed that while the porous insulating layer replaces the existing separator, electrical insulating properties between electrodes are excellently maintained, and short circuits due to shrinkage of the separator can be substantially prevented, thereby remarkably improving the safety of the lithium secondary battery.

In addition, it was confirmed that as the thickness ratio of each insulator is optimized, electrochemical characteristics such as life characteristics of a lithium secondary battery including such an electrode assembly could also be excellently exhibited.

### [BRIEF DESCRIPTION OF THE DRAWINGS]

For a more complete understanding of the present disclosure, and the advantages thereof, reference is now made to the following descriptions taken in conjunction with the accompanying drawings, in which:
FIG. 1 shows a method of measuring the resistance of electrode assemblies of Examples 1 to 3 and Comparative Examples 1 and 2 under the application of a voltage of 50V, which is a graph showing a comparison of the results of evaluating electrical insulating properties.
FIG. 2 is a graph showing a comparison of open circuit voltage (OCV) profiles over time for the lithium secondary batteries of Examples 1 to 3 and Comparative Examples 1 and 2.
FIG. 3 is a graph showing the results of evaluating life characteristics for the lithium secondary batteries of Examples 1 to 3.

### [DETAILED DESCRIPTION OF THE EMBODIMENTS]

Hereinafter, terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

Unless defined otherwise, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the specification, unless explicitly described to the contrary, the word "comprise" and variations such as "comprises" or "comprising" will be understood to imply the inclusion of stated elements but not the exclusion of any other elements.

The term "and/or" as used in a phrase such as "A and/or B" herein is intended to include "A" (alone), or "B" (alone), or "both A and B,".

As used herein, the term "%" means wt.% unless explicitly indicated otherwise.

As used herein, the " ζ potential (zeta potential)" is the index indicating the degree of surface charge of the particles. The zeta potential of particles in the present invention can be measured, for example, by an electrophoretic light scattering method using a dynamic light scattering device. Specifically, the zeta potential value of the particles can be measured by an electrophoretic light scattering method after the polymer particles are dispersed in water or an alcohol-based solvent without a dispersant,

Now, an electrode assembly and the like according to embodiments of the present invention will be described in detail.

### Electrode Assembly

An electrode assembly according to an embodiment of the present invention comprises a cathode-insulating layer composite including a first insulating layer arranged on the cathode, and an anode-insulating layer composite including a second insulating layer arranged on the anode, wherein the first or second insulating layer is a porous insulating layer including polymer particles or ceramic particles having an absolute value of zeta potential of 25 mV or more, and wherein a ratio of a sum of thicknesses of the first and second insulating layers to a total sum of thicknesses of the cathode-insulating layer composite and the anode-insulating layer composite is 19% to 30%.

The cathode may include a cathode current collector and a cathode active material layer.

For example, the cathode current collector may use stainless steel, aluminum, nickel, titanium, calcinated carbon, or aluminum or stainless steel of which surface is treated with carbon, nickel, titanium, silver, or the like, but is not necessarily limited thereto.

The cathode active material layer include a cathode active material, and may optionally further include a conductive material, a binder, and the like.

The cathode active material may be a compound capable of reversibly intercalating and deintercalating lithium, and specifically, may include a lithium metal oxide containing lithium and at least one metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), and any one thereof or a compound of two or more thereof may be used.

Further, the cathode active material may be a compound capable of reversibly intercalating and deintercalating lithium, and specifically, may include a lithium iron phosphate compound (e.g., LiFePO₄), a lithium-manganese-iron phosphate compound (e.g., LiMnₓFe₁₋ₓPO₄, 0<x<1), and the like.

Among these compounds, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂,Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), and the like, and any one thereof or a mixture of two or more thereof may be used.

The cathode active material may be contained in an amount of 60 to 99 wt.%, or 70 to 99 wt.%, or 80 to 98 wt.% based on the total weight of the cathode active material layer.

Examples of the conductive material may include carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, but are not necessarily limited thereto.

Further, examples of the binder may include polyvinylidene fluoride, polyvinyl alcohol, carboxymethylcellulose(CMC), starch, hydroxypropylcellulose, regenerated cellulose, polyvinylpyrrolidone, polytetrafluoroethylene, polyethylene(PE), polypropylene, an ethylene-propylene-diene monomer, a sulfonated ethylene-propylene-diene monomer, a styrene-butadiene rubber, a fluoro rubber, various copolymers, and the like, but are not necessarily limited thereto.

The first or second insulating layer, or the first and second insulating layers may each independently include at least one of the polymer particles and the ceramic particles. At this time, the polymer particles and the ceramic particles may each independently have an absolute value of zeta potential of 25 mV or more.

The absolute value of the zeta potential can define the surface polarity of the polymer particles or ceramic particles, wherein having an absolute value equal to or more than a prescribed level may mean that the surface polarity increases. As the particles having a high surface polarity are combined with a binder described below in this way, the first and/or second insulating layer can exhibit porosity replacing the existing separator, excellent coating properties and surface properties.

In particular, the polymer particles or ceramic particles satisfying such physical properties may have a relatively high melting point. Thus, when an insulating layer including the same is applied, a short circuit due to shrinkage or the like of the existing separator can be suppressed, and a lithium secondary battery exhibiting improved high-temperature safety can be provided.

In addition, each insulating layer can improve the impregnation property of a flame retardant electrolyte, which will be described later, compared to the existing separator. This appears to be because the flame retardant electrolyte has a relatively high polarity compared to the existing electrolyte. Therefore, by combining the electrode assembly of the one embodiment with a flame retardant electrolyte, high lithium ion mobility through the insulating layer can be ensured while further improving the safety of the lithium secondary battery, thereby further improving electrochemical properties of the battery.

Meanwhile, the zeta potential of the polymer particles or ceramic particles can be measured, for example, by an electrophoretic light scattering method using a dynamic light scattering device. At this time, the zeta potential of the polymer particles or ceramic particles can be measured in a state where the particles are dispersed in water or an alcohol-based solvent without a separate dispersant. In a specific one example, the zeta potential can be measured in a state in which the particles are dispersed at a concentration of 0.1 wt.% or less in a water solvent.

The absolute value of the zeta potential of the polymer particles or ceramic particles may be 25 mV or more, or 35 mV or more, or 45 mV or more, and 100 mV or less, or 90 mV or less, or 80 mV or less. When the absolute value of the zeta potential satisfies the above numerical range, the flame retardant electrolyte can be easily impregnated into each insulating layer, so that a uniform reaction can occur throughout the electrode, and thus, various performances such as capacity, output, and life characteristics of the lithium secondary battery can be improved.

Specific examples of the polymer particles include at least one selected from the group consisting of polyethylene oxide(PEO), polyphenylene sulfide(PPS), polyalkyl(meth)acrylate such as polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate, but are not limited thereto.

In addition, specific examples of the ceramic particle include at least one selected from the group consisting of aluminum oxide, titanium oxide, iron oxide, silicon oxide, zirconium oxide, cobalt oxide, tin oxide, nickel oxide, zinc oxide, vanadium oxide, and manganese oxide, but are not limited thereto.

The zeta potential of the polymer particles or ceramic particles can be adjusted not only by the type of each particle, but also by the particle size or surface properties of these particles. Thus, in order to achieve the zeta potential of the polymer particles or ceramic particles, the appropriate porosity of the dispersive or porous coating layer, and the like, the polymer particles or ceramic particles may have an average particle size D₅₀ of 50 nm to 3 *µ*m, 50 nm to 2 *µ*m, or 100 nm to 1.5 *µ*m.

When the average particle size D₅₀ of the particles is smaller than 50 nm, aggregation between particles occurs due to a decrease in the dispersibility of the particles, and pores are clogged due to the aggregated particles, which makes it difficult to form an insulating layer having a porous structure. When the average particle size D₅₀ of the particles is larger than 3 *µ*m, there is a problem that the pore structure is simplified in the porous structure in the insulating layer, and thus lithium dendrite is generated when manufacturing the cells.

In addition, in order to control the surface properties of the polymer particles or ceramic particles and thereby adjust the zeta potential, and the like, the polymer particles or ceramic particles may be contained in each insulating layer in a state of being surface-treated with oxygen plasma or ion beam.

On the other hand, in the electrode assembly of one embodiment, the first insulating layer may be coated on the cathode, thereby forming a cathode-insulating layer composite. The first insulating layer can serve to offer electrical insulation between the cathode and the anode.

The first insulating layer may further include a dispersant and a binder in addition to the above-mentioned polymer particles or ceramic particles.

The dispersant may include, for example, a hydrogenated nitrile-based polymer. Specifically, the dispersant may be a hydrogenated nitrile-based copolymer.

Specifically, the hydrogenated nitrile-based copolymer may be a copolymer containing a structural unit derived from α,β-unsaturated nitrile and a structural unit derived from a hydrogenated conjugated diene, or may be a copolymer containing a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile or the like may be used, and any one alone or a mixture of two or more thereof may be used. As the conjugated diene-based monomer, for example, conjugated diene-based monomers having 4 to 6 carbon atoms such as 1,3-butadiene, isoprene, or 2,3-methyl butadiene may be used, and any one alone or a mixture of two or more thereof may be used.

More specifically, the hydrogenated nitrile-based copolymer may be hydrogenated nitrile-based butadiene rubber (H-NBR).

Meanwhile, the binder serves to improve the adhesion between the active material layer and the insulating layer having a zeta potential absolute value of 25 mV or more, and appropriately disperses the above-mentioned polymer particles or ceramic particles on the binder to enable formation of an excellent porous insulating layer.

Examples of the binder include at least one selected from the group consisting of polyvinylidene fluoride(PVDF), polyvinyl alcohol(PVA), carboxymethyl cellulose(CMC), starch, hydroxypropyl cellulose, regenerated cellulose, polyvinylpyrrolidone(PVP), polytetrafluoroethylene, polyethylene, polypropylene, ethylene-propylene-diene monomer, a sulfonated ethylene-propylene-diene monomer,styrene-butadiene rubber, and fluoro rubber.

The first insulating layer may have a thickness of at least 5 *µ*m or more, and may have a thickness of 10 to 30 *µ*m, or 10 to 20 *µ*m. When the thickness of the first insulating layer satisfies the above numerical range, it is possible to ensure excellent electrical insulating properties of the electrode assembly of one embodiment.

Further, the above-mentioned first insulating layer may include 55 to 85 wt.%, or 60 to 80 wt.% of the polymer particles or ceramic particles, 10 to 35 wt.%, or 11 to 33 wt.% of the binder, and 3 to 20 wt.%, or 5 to 15 wt.% of the dispersant. Thereby, the first insulating layer is formed in the form of an excellent porous insulating layer on the cathode active material layer, and thus can exhibit excellent electrical insulating properties.

Meanwhile, the second insulating layer can be coated on the anode, thereby forming an anode-insulating layer composite. The second insulating layer may serve to offer electrical insulation between the cathode and the anode.

Such a second insulating layer may have a composition different from that of the first insulating layer mentioned above, but can be in contact with the first insulating layer to exhibit excellent electrical insulating properties between electrodes. The second insulating layer may include polymer particles or ceramic particles of the same type as that of the first insulating layer so as to serve as substitute for the existing separator. More appropriately, the second insulating layer may have the same composition including the same contents of the same components as the first insulating layer.

However, the thickness of the second insulating layer may be different from the thickness of the first insulating layer. The second insulating layer may have a thickness of at least 5 ,um or more, or may have a thickness of 15 to 35 *µ*m, or 20 to 35 *µ*m, or 20 to 30 *µ*m. When the thickness of the second insulating layer satisfies the numerical range, it is possible to ensure excellent electrical insulation properties of an electrode assembly which will be described later.

In the electrode assembly of the one embodiment, the first and second insulating layers preferably satisfy a certain thickness ratio and thickness range so that the first and second insulating layers can act together to exhibit excellent electrical insulating properties and improve the safety of the lithium secondary battery.

More specifically, the first and second insulating layers may be formed such that a ratio of a sum of thicknesses of the first and second insulating layers to a total sum of thicknesses of the cathode-insulating layer composite and the anode-insulating layer composite is 19.0% to 30.0%, or 19.5% to 29.0%, or 19.6% to 25.0%. At this time, the thickness ratio can be calculated as a ratio of the sum of thicknesses of the first and second insulating layers based on the total sum of thicknesses of the cathode and anode including the current collector and the active material layer, and the first and second insulating layers. The sum of thicknesses of the first and second insulating layers may be 33 to 55 *µ*m, or 33 to 50 *µ*m, or 33 to 40 *µ*m.

When the sum of thicknesses of the first and second insulating layers or the ratio thereof is excessively small, it was confirmed that electrical insulating properties between electrodes cannot be sufficiently secured. Conversely, when the sum of thicknesses of the first and second insulating layers or the ratio thereof is excessively large, resistance characteristics, capacity characteristics, life characteristics or the like of the lithium secondary battery may deteriorate.

The cathode-insulating layer composite and the anode-insulating layer composite are laminated, and the first insulating layer and the second insulating layer may be arranged so as to face each other.

By arranging the first insulating layer and the second insulating layer so as to face each other, the electrode assembly can be laminated in the order of, for example, a cathode, a first insulating layer, a second insulating layer, and an anode. That is, the first insulating layer and the second insulating layer may be in direct contact with each other without a separate separator or the like interposed therebetween. The first insulating layer and the second insulating layer may electrically insulate the cathode and the anode from each other.

Further, instead of forming the first insulating layer and the second insulating layer on one surface of the cathode and the anode at one time, the first insulating layer and the second insulating layer are formed on the cathode and the anode and then combined, thereby achieving more excellent electrical insulating properties. The reason is because when the insulating layer is formed on one surface of the cathode or the anode cathode at one time, microcracks are more easily generated in the insulating layer, and current is concentrated in the generated microcracks, so that dendrite growth is induced in the insulating layer. Unlike the same, when the first insulating layer and the second insulating layer are respectively formed on the cathode and the anode and then combined, dendrite growth is suppressed, and excellent electrical insulating properties can be secured.

Therefore, the electrode assembly for a lithium secondary battery may not include a separate separator.

Meanwhile, in the electrode assembly of one embodiment, the anode included in the anode-insulating layer composite may include an anode current collector and an anode active material layer.

The anode current collector is not particularly limited as long as it has high conductivity without causing a chemical change in the battery, and, for example, copper, stainless steel, aluminum, nickel, titanium, calcinated carbon, or copper or stainless steel of which surface is treated with carbon, nickel, titanium, silver, or the like, an aluminum-cadmium alloy, or the like may be used.

The anode current collector may generally have a thickness of 3 *µ*m to 500 *µ*m. Also, similar to the cathode current collector, the anode current collector may have fine protrusions and depressions formed on a surface thereof to enhance adherence of an anode active material. For example, the anode current collector may be used in various forms such as a film, a sheet, a foil, a net, a porous body, a foaming body, and a non-woven fabric structure.

The anode active material layer may include an anode active material, and may optionally further include a conductive material, a binder, and the like.

The anode active material may include at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based anode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0<x≤1), LiₓWO₂(0<x≤1) and SnₓMe₁₋ₓMe'_{y}O_{z} (Me: Mn, Fe, Pb, Ge; Me': Al, B, P, Si,Groups I, II and III elements of the periodic table, or halogen; 0<x≤1; 1≤y≤3; 1≤z≤8) can be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, lithium vanadium oxide, and the like.

The anode active material may be contained in an amount of 60 to 99 wt.%, or 70 to 99 wt.%, or 80 to 98 wt.% based on a total weight of the anode active material layer.

Further, the conductive material is a component that further improves the conductivity of the anode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between conductive material, the anode active material and the anode current collector. Examples of the binder include polyvinylidene fluoride(PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene monomer, a sulfonated ethylene-propylene-diene monomer, a styrene-butadiene rubber, a fluoro rubber, various copolymers thereof, and the like.

### <Method of Manufacturing Electrode Assembly>

Meanwhile, according to another embodiment of the present invention, there can be provided a method of manufacturing an electrode assembly comprising the step of:
(S1) forming a first insulating layer on a cathode to form a cathode-insulating layer composite;
(S2) forming a second insulating layer on an anode to form an anode-insulating layer composite; and
(S3) laminating the cathode-insulating layer composite and the anode-insulating layer composite.

Further, as already described with respect to one embodiment, the first or second insulating layer may include polymer particles or ceramic particles having an absolute value of zeta potential of 25 mV or more. However, since each composition of the cathode, the anode, the first insulating layer, and the second insulating layer has been described in detail above, additional descriptions thereof will be omitted.

In the manufacturing method of the other embodiment, first, a first insulating layer is formed on the cathode to form a cathode-insulating layer composite (S1). Specifically, a cathode is prepared by coating a slurry composition for forming a cathode active material layer onto a cathode current collector, followed by drying and rolling. A first insulating layer slurry can be prepared and coated onto the prepared cathode, and then dried to form a first insulating layer, thereby forming a cathode-insulating layer composite.

The first insulating layer slurry may include polymer particles or ceramic particles, a dispersant, a binder, a solvent, and the like.

Then, a second insulating layer is formed on an anode to form an anode-insulating layer composite (S2).

Specifically, a second insulating layer slurry can be prepared and coated onto the prepared anode, and then dried to form an anode-insulating layer composite.

The second insulating layer slurry can be prepared in the same manner as the first insulating layer slurry. However, the type and/or content of the polymer particles or ceramic particles, the dispersant, the binder, and the solvent can be appropriately adjusted in order to adjust the insulating properties.

Then, the cathode-insulating layer composite and the anode-insulating layer composite are laminated (S3).

The cathode-insulating layer composite and the anode-insulating layer composite can be laminated such that the first insulating layer and the second insulating layer are in direct contact with each other.

Thereby, the first insulating layer and the second insulating layer may be arranged to face each other. The first insulating layer and the second insulating layer are arranged adjacent to each other, and the first insulating layer and the second insulating layer may serve to offer electrical insulation between a cathode and an anode.

### Lithium Secondary Battery

According to yet another embodiment of the present invention, there can be provided a lithium secondary battery comprising: a battery case, an electrolyte, and the electrode assembly of one embodiment mentioned above. Since the electrode assembly includes the first insulating layer and the second insulating layer, it is possible to provide a lithium secondary battery that can sufficiently secure electrical insulating properties between the cathode and the anode without a separate separator, and also can suppress a short circuit due to shrinkage of an existing separator, thereby improving the stability.

In particular, when a voltage of 50 V is applied between the cathode and the anode of the lithium secondary battery, the resistance value is 10⁸ ohms or more, specifically 10⁸ to 10¹³ ohms. Within the above numerical range, the cathode and the anode may not be short-circuited, and electrical insulation may be sufficiently secured to thereby improve battery stability.

The battery case may be one commonly used in the art, and the outer shape according to the application use of the battery is not limited. For example, the battery case may be a cylindrical type, a prismatic type, a pouch type, a coin type, and the like, but is not limited thereto.

The electrolyte may specifically include a flame retardant electrolyte.

At this time, the flame retardant electrolyte may be defined as including a flame retardant solvent having a flash point of 100°C or more or having no flash point, and a lithium salt. At this time, the flame retardant solvent may encompass a substantially non-flammable organic solvent having no flash point, and an organic solvent having a high flash point of 100°C or more, or 100 to 250°C, or 110 to 200°C, and a low volatility. The lithium secondary battery comprises a flame retardant electrolyte including such a flame retardant solvent and a lithium salt and thereby can exhibit excellent high-temperature stability. Moreover, since the flame retardant electrolyte can be uniformly impregnated into the coating layer including the polymer particles, various electrochemical characteristics of the lithium secondary battery can be achieved excellently. The flash point defining the flame retardant solvent can be measured using either a closed tester or open tester according to the standard methods of ASTM D93 or ASTM D1310.

In specific examples, the flame retardant solvent may be an organic solvent having a functional group selected from the group consisting of a functional group that can contribute to low volatility and flame retardancy or non-flammability of organic solvents, for example, fluorine-containing functional groups such as sulfone-based functional groups and fluorine-substituted hydrocarbon groups, and phosphorus-containing functional groups such as phosphate groups or phosphonate groups, and nitrile-based functional groups, and one or more of such organic solvents can be mixed and used. More specifically, the flame retardant solvent may include at least one organic solvent selected from the group consisting of a sulfone-based compound, a nitrile-based compound, a phosphoric acid-based compound and a fluorine-substituted carbonate-based compound.

Among them, the sulfone-based compound may include at least one selected from the group consisting of a cyclic sulfone-based compound or a linear sulfone-based compound, and specifically, the sulfone-based compound may include at least one selected from the group consisting of sulfolane, ethylmethyl sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

Further, the nitrile-based compound may include at least one selected from the group consisting of malononitrile, succinonitrile, glutaronitrile, adiponitrile, suberonitrile, and sebaconitrile.

Further, the phosphoric acid-based compound may include at least one selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

Additionally, the fluorine-substituted carbonate-based compound may include at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoro-propyl)carbonate.

Meanwhile, the lithium salt included in the flame retardant electrolyte is used as a medium for transferring ions in a lithium secondary battery. The lithium salt may include, for example, Li⁺ as a cation, and may comprise at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN- as an anion.

Specifically, the lithium salt may include a single material selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI (lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more thereof, but it is preferable to include LiN(SO₂CF₃)₂from the viewpoint of excellent stability.

In addition to these, the lithium salt commonly used in an electrolyte of a lithium secondary battery can be used without particular limitation.

The lithium salt can be changed as appropriate within a generally usable range, but the lithium salt may be included in the flame retardant electrolyte at a concentration of 1M to 3M, or a concentration of 1M to 2.5M, or a concentration of 1M to 2M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

The above-mentioned lithium secondary battery can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system (ESS).

Hereinafter, the present invention will be described in more detail with reference to specific examples. However, the following examples are only exemplary embodiments for facilitating understanding of the invention, and are not intended to limit the scope of the invention. It would be obvious to those of ordinary skill in the art that various changes and modifications can be made to the invention without departing from the scope and spirit of the present disclosure, and it goes without saying that these changes and modifications fall within the scope of the appended claims.

### Example and Comparative Example

First, in the following examples, the zeta potential of polymer particles or ceramic particles was measured by an electrophoretic light scattering method using a dynamic light scattering device (product name: ELS-Z), in a state in which the particles were dispersed at a concentration of 0.1 wt.% or less in a water solvent at a temperature of 25°C.

### Example 1

A cathode with a total thickness of 60 *µ*m containing Li(Ni_{0.8}Mn_{0.1}Co_{0.1})O₂ as a cathode active material (the sum of thicknesses of the cathode current collector and the cathode active material layer) and an anode with a total thickness of 75 *µ*m containing artificial graphite as an anode active material (the sum of thicknesses of the anode current collector and the anode active material layer) were prepared.

Polymethyl methacrylate (PMMA) polymer particles having a zeta potential of -50 mV and an average particle size D₅₀ of 1 *µ*m was put and dispersed in N-methyl-2-pyrrolidone(NMP) solvent so that the mass ratio of PMMA: hydrogenated nitrile rubber(H-NBR) dispersant: polyvinylidene fluoride (PVDF) binder was 7: 1:2, thereby preparing an insulating layer slurry.

S1: The insulating layer slurry was coated onto the cathode and dried to form a first insulating layer, thereby forming a cathode-insulating layer composite.

S2: The insulating layer slurry was coated onto the anode and dried to form a second insulating layer, thereby forming an anode-insulating layer composite.

S3: The cathode-insulating layer composite and the anode-insulating layer composite were laminated to manufacture an electrode assembly. At this time, the first insulating layer and the second insulating layer were arranged so as to face each other.

The thickness of the first insulating layer was 13 *µ*m, the thickness of the second insulating layer was 20 *µ*m, and the sum of thicknesses of the first insulating layer and the second insulating layer was measured to be 33 *µ*m. Accordingly, the ratio of the sum 33 *µ*m of thicknesses of the first and second insulating layers to the total sum 168 ,um of thicknesses of the cathode, the anode, and the first and second insulators was calculated to be about 19.64%.

### Example 2

The procedures were performed in the same manner as in Example 1, except that the thicknesses of the insulating layers were different.

The thickness of the first insulating layer was 20 *µ*m, the thickness of the second insulating layer was 30 *µ*m, and the total sum of thicknesses of the first insulating layer and the second insulating layer was measured to be 50 *µ*m. Accordingly, the ratio of the sum 50 *µ*m of the thicknesses of the first and second insulating layers to the total sum 185 *µ*m of the thicknesses of the cathode, the anode, and the first and second insulators was calculated to be about 27.03%.

### Example 3

The procedures were performed in the same manner as in Example 1, except that the thicknesses of the insulating layers were different.

The thickness of the first insulating layer was 20 *µ*m, the thickness of the second insulating layer was 35 *µ*m, and the total sum of thicknesses of the first insulating layer and the second insulating layer was measured to be 55 *µ*m. Accordingly, the ratio of the sum 55 *µ*m of thicknesses of the first and second insulating layers to the total sum 190 ,um of thicknesses of the cathode, the anode, and the first and second insulators was calculated to be about 28.95%.

### Comparative Example 1

A cathode with a total thickness of 60 *µ*m containing Li(Ni_{0.8}Mn_{0.1}Co_{0.1})O₂ as a cathode active material (the sum of thicknesses of the cathode current collector and the cathode active material layer) and an anode with a total thickness of 75 ,um containing artificial graphite as an anode active material (the sum of thicknesses of the anode current collector and the anode active material layer) were prepared.

Polymethyl methacrylate (PMMA) polymer particles having a zeta potential of -50 mV and an average particle size D₅₀ of 1 *µ*m was put and dispersed in N-methyl-2-pyrrolidone (NMP) solvent so that the mass ratio of PMMA: hydrogenated nitrile rubber (H-NBR) dispersant: polyvinylidene fluoride (PVDF) binder was 7: 1:2, thereby preparing an insulating layer slurry.

The insulating layer slurry was coated onto the anode and dried to form an anode-insulating layer composite. Then, a cathode was laminated on the anode-insulating layer composite to manufacture an electrode assembly. The total thickness of the insulating layers was measured to be 36 *µ*m. Accordingly, the ratio of the sum 36 *µ*m of thicknesses of the first and second insulating layers to the total sum 171 *µ*m of thicknesses of the cathode, the anode, and the first and second insulators was calculated to be about 21.05%.

### Comparative Example 2

The procedures were performed in the same manner as in Example 1, except that the thicknesses of the insulating layers were different.

The thickness of the first insulating layer was 10 *µ*m, the thickness of the second insulating layer was 20 *µ*m, and the total sum of thicknesses of the first insulating layer and the second insulating layer was measured to be 30 *µ*m. Accordingly, the ratio of the sum 30 *µ*m of thicknesses of the first and second insulating layers to the total sum 165 ,um of thicknesses of the cathode, the anode, and the first and second insulators was calculated to be about 18.18%.

### Experimental Example 1: Comparison of Electrical Insulating Characteristics (1)

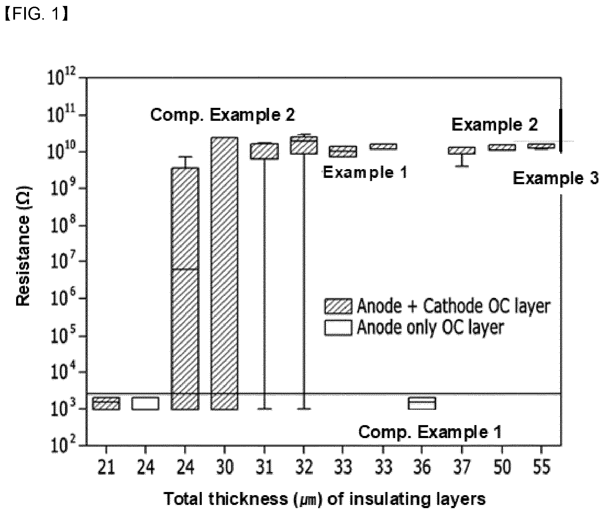

A Hi-pot test was performed on the electrode assemblies of Examples 1 to 3 and Comparative Examples 1 and 2. The Hi-pot test was performed by roll laminating the cathode and the anode at 80°C to form a monocell, and then applying a voltage to the monocell. The test was performed by measuring the resistance value for the total thickness of the insulating layers under the condition of applying a voltage of 50V. The experimental results are shown in FIG. 1.

Referring to FIG. 1, it was confirmed in the case of Example 1, it has a structure in which a first insulating layer and a second insulating layer are respectively formed on the cathode and the anode, and then laminated, wherein the total thickness of the insulating layer is 33 µm, the thickness ratio thereof is about 19.64%,which exhibits a high level of resistance value of about 10¹⁰ ohm and excellent insulating properties.

It was confirmed that Examples 2 and 3 also have a structure in which the first insulating layer and the second insulating layer are respectively formed on the cathode and the anode, and then laminated, wherein the total thicknesses of the insulating layers are 50 *µ*m and 55 *µ*m, respectively, and the thickness ratios thereof are about 27.03% and about 28.95%, which exhibit a high resistance value of about 10¹⁰ ohm and excellent insulating properties.

However, it was confirmed that in the case of Comparative Example 1, it has a structure in which one insulating layer is formed on the anode, and then the cathode is laminated, wherein the thickness of the insulating layer is 36 *µ*m, and the thickness ratio thereof is 21.05%; despite being relatively thick, it exhibits a low resistance value of about 10³ ohm and inferior insulating properties.

In addition, it was confirmed that in the case of Comparative Example 2, it has structure in which the first insulating layer and the second insulating layer are respectively formed on the cathode and the anode and then laminated, wherein the total thickness of the insulating layer is 30 *µ*m, and the thickness ratio thereof is about 19.18%, which exhibits a low resistance value of about 10³ ohm and poor insulation properties.

### Experimental Example 2: Comparison of Electrical Insulating Characteristics (2)

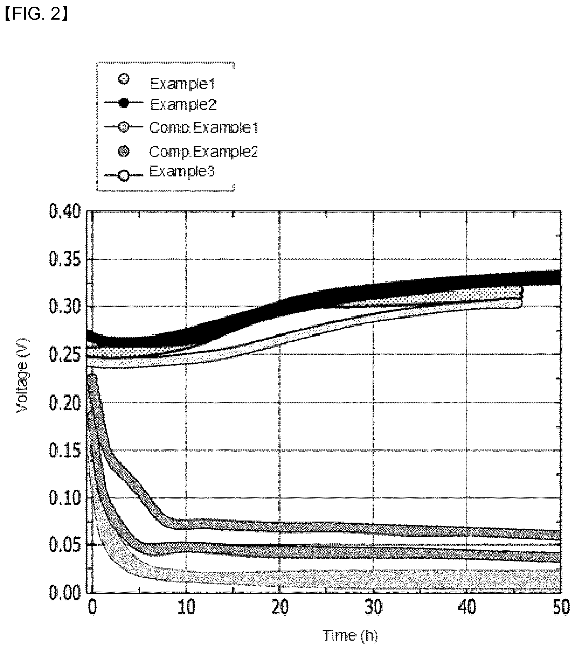

Open circuit voltage (OCV) profiles of Examples 1 to 3 and Comparative Examples 1 and 2 were measured. The carbonate-based electrolyte was injected into the electrode assemblies of Examples and Comparative Examples, and then subjected to a wetting process at room temperature. The voltage was measured at 1-minute intervals or for every 20 mV voltage change, and the results are shown in FIG. 2.

Referring to FIG. 2, in the case of Examples 1 to 3, the OCV voltage was maintained practically constant at a level of about 0.30 to 0.35V over time.

However, in the case of Comparative Examples 1 and 2, it was confirmed that the OCV voltage decreases to 0.1V or less after injection of the electrolyte. This is because the insulating properties of the insulating layer in Comparative Examples 1 and 2 are inferior, and an internal microshort circuit occurs between electrodes. Accordingly, it was confirmed that the electrical insulating properties of Examples 1 to 3 are superior to those of Comparative Examples 1 and 2.

### Experimental Example 3 - Evaluation of Life Characteristics of Lithium Secondary Battery

The carbonate-based electrolyte was injected into the electrode assemblies of Examples 1 to 3 to manufacture lithium secondary batteries, and then life characteristics (capacity retention) thereof were evaluated by the following method.

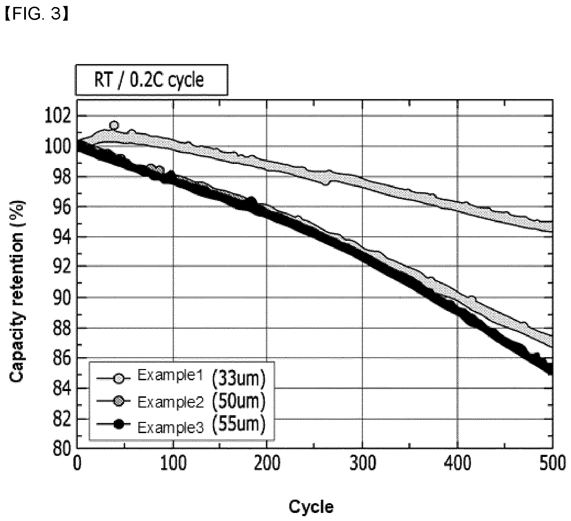

Each lithium secondary battery was charged and discharged at 0.1C in a CC/CV charging mode with an upper limit voltage of 4.2V and a CC discharging mode with a lower limit voltage of 3V, and then charged and discharged in a voltage range of 4.2 V to 3 V at 0.2 C/0.2 C for 500 cycles. The measurement results of the capacity retentions for Examples 1 to 3 are shown in FIG. 3.

Referring to FIG. 3, it was confirmed that Examples 1 to 3 exhibit an excellent capacity retention of 95% or more at 200 cycles or less. Further, it was confirmed that Example 1 (total sum of thicknesses of the insulating layers: 33 µm; thickness ratio: about 19.64%) exhibits more excellent life characteristics as compared with Example 2 (total sum of thicknesses of the insulating layers: 50 µm; thickness ratio: about 27.03%) and Example 3 (total sum of thicknesses of the insulating layers: 55 µm; thickness ratio: about 28.95%).

## Claims

1. An electrode assembly for a lithium secondary battery comprising:
a cathode-insulating layer composite including a first insulating layer arranged on the cathode; and
an anode-insulating layer composite including a second insulating layer arranged on the anode,
wherein the first or second insulating layer is a porous insulating layer including polymer particles or ceramic particles having an absolute value of zeta potential of 25 mV or more, and
wherein a ratio of a sum of thicknesses of the first and second insulating layers to a total sum of thicknesses of the cathode-insulating layer composite and the anode-insulating layer composite is 19% to 30%.

2. The electrode assembly for a lithium secondary battery according to claim 1, wherein:
the first and second insulating layers each have a thickness of 5 *µ*m or more, and the sum of thicknesses of the first and second insulating layers is 33 to 55 *µ*m.

3. The electrode assembly for a lithium secondary battery according to claim 1, wherein:
the first and second insulating layers are in direct contact with each other.

4. The electrode assembly for a lithium secondary battery according to claim 1, wherein:
the electrode assembly for a lithium secondary battery does not include a separate separator.

5. The electrode assembly for a lithium secondary battery according to claim 1, wherein:
the cathode-insulating layer composite and the anode-insulating layer composite are laminated, and
the first and second insulating layers are arranged so as to face each other.

6. The electrode assembly for a lithium secondary battery according to claim 1, wherein:
the first insulating layer has a thickness of 10 to 20 *µ*m, and the second insulating layer has a thickness of 20 to 35 *µ*m.

7. The electrode assembly for a lithium secondary battery according to claim 1, wherein:
the first and second insulating layers each independently include the polymer particles or ceramic particles and a binder.

8. The electrode assembly for a lithium secondary battery according to claim 1, wherein:
the first and second insulating layers have a composition identical to each other.

9. The electrode assembly for a lithium secondary battery according to claim 1, wherein:
the polymer particles include at least one selected from the group consisting of polyethylene oxide, polyphenylene sulfide, polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate and polyethylene terephthalate.

10. The electrode assembly for a lithium secondary battery according to claim 1, wherein:
the ceramic particles comprise at least one selected from the group consisting of boehmite, aluminum oxide, titanium oxide, iron oxide, silicon oxide, zirconium oxide, cobalt oxide, tin oxide, nickel oxide, zinc oxide, vanadium oxide, and manganese oxide.

11. A method of manufacturing the electrode assembly for a lithium secondary battery as defined in claim 1, the method comprising the steps of:
(S1) forming a first insulating layer on a cathode to form a cathode-insulating layer composite;
(S2) forming a second insulating layer on an anode to form an anode-insulating layer composite; and
(S3) laminating the cathode-insulating layer composite and the anode-insulating layer composite,
wherein the first or second insulating layer includes polymer particles or ceramic particles having an absolute value of zeta potential of 25 mV or more.

12. A lithium secondary battery comprising:
a battery case;
an electrolyte; and
the electrode assembly as defined in claim 1.

13. The lithium secondary battery according to claim 12, wherein:
when a voltage of 50V is applied between the cathode and the anode of the lithium secondary battery, a resistance value is 10⁸ ohm or more.
